(19) **Europäisches Patentamt / European Patent Office / Office européen des brevets**

(11) **EP 4 694 573 A1**

(12) **EUROPEAN PATENT APPLICATION**

(43) Date of publication:
**11.02.2026 Bulletin 2026/07**

(21) Application number: **24192885.2**

(22) Date of filing: **05.08.2024**

(51) International Patent Classification (IPC):
**H04W 92/12** (2009.01)     **H04W 92/20** (2009.01)
**H04W 92/04** (2009.01)

(52) Cooperative Patent Classification (CPC):
**H04W 92/20; H04W 92/12;** H04W 92/045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Telefónica Germany GmbH & Co. OHG 80992 München (DE)**

(72) Inventors:
- **HÖHN, Anja**
  **82299 Türeknfeld (DE)**
- **MÜLLNER, Robert**
  **81479 München (DE)**
- **WALZ, Eduard**
  **53347 Alfter (DE)**
- **HUBER, Gerald**
  **82389 Böbing (DE)**

(74) Representative: **Lorenz Seidler Gossel Part. mbB Widenmayerstr. 23 80538 München (DE)**

(54) **A BASE STATION AND A MOBILE TELECOMMUNICATION NETWORK COMPRISING SUCH A BASE STATION**

(57) The present invention relates to a base station for use in a mobile telecommunication network, comprising an air interface adapted to establish an uplink data transfer and/or downlink data transfer with at least one user equipment of the network, a transport interface adapted to establish a transport link via an adapted air interface of a base station to the backhaul of the network, preferably wherein the transport interface of this base station is a microwave interface or an optical fibre interface, and a monitoring unit adapted to monitor a transport link established by the transport interface to the backhaul of the network, preferably wherein the monitoring unit is adapted to monitor the existence and/or the properties of the transport link established by the transport interface to the backhaul of the network, wherein the base station is further adapted, on basis of a monitoring result of the monitoring unit, to establish a transport link to the backhaul of the network via the air interface, preferably wherein establishing a transport link to the backhaul of the network by the air interface is made automatically on basis of the monitoring result of the monitoring unit.

EP 4 694 573 A1

**Description**

The presented invention relates to the field of mobile telecommunication systems, and more particularly to a base station, a method, and a mobile telecommunication network.

Typically, a mobile telecommunication network comprises a plurality of base stations which are in connection with at least one user equipment over a respective air interface of the base station. The air interface allows the user equipment to move freely while the connection to the network via the base station is maintained. Typically, the data received or transmitted to the user equipment are transferred via an air interface only between the user equipment and the base station to which the user equipment is connected. The data transfer to more distant network components (= backhaul) from the base station is done via a transport link typically realised via a microwave connection or an optical fibre connection.

The protocol used in accordance with the present invention does not have to be a transport protocol; the air interface protocol can also be used. For example, it is conceivable that the base station that fails with the help of a frequency change (same hardware only different software) behaves like a mobile phone and thus reaches a neighbouring base station. From here, the traffic could then be forwarded via the "normal" transport network and thus also the information about the failure of the transport connection. In this simple variant, a software change would only be necessary at the "damaged" base station (which has lost its classic transport connection - radio relay or fibre optic) and the other base stations would continue to work as usual for the time being. Of course, subsequent optimisation via a higher-level control centre - as described - would be a significant improvement to the overall system. In the event of a failure, several base stations can also operate in this way and the useful signal from customers or emergency services can be forwarded via several stations. As base stations have significantly higher transmission lines than normal terminals, it seems very likely that one or more neighbouring stations can be reached. A very similar technology (AIB) is used today, but only as a general replacement for other transport connections. The special feature of this idea is that a second, alternative connection could be set up ad hoc with the existing technology. This can then be used as required (stabilisation of an existing failing transport connection, replacement for the failure of a connection, temporary connection until the final connection is available). In particular, its use in the event of a failure could ensure that the emergency services can be reached, transmit messages to those affected (KATWARN) and save lives.

In the prior art, the concept of IAB, or Integrated Access and Backhaul, is known, describing the capability of a base station in mobile networks where the same or different air interface resources are used for both access (communication between the user equipments and the base station) and backhaul (communication between different network nodes, typically between the base station and the core network). In the prior art, IAB is used for coverage extension and for filling coverage holes by cell densification. It is also used for providing infrastructure on demand for example for temporary events, as well as for providing indoor coverage by outdoor base stations. In these applications of the prior art, IAB is configured manually on a semi-permanent basis.

In the 3rd Generation Partnership Project (3GPP) Release 16 [1][2] the concept of Integrated Access and Backhaul (IAB) for coverage extension by using an in-band transport link is introduced. Instead of deploying a conventional transport interface e.g., a fibre connection, a part of the air interface capacity of a base station is used as backhaul link. In prior art's networks this method is used for coverage extension and simplifies network deployment e.g., in pedestrian zones, since only electrical energy is required for base station deployment, while the transport link is realised either in-band e.g., in the 3.5 GHz spectrum previously only used for radio data transfer between the User Equipment (UE) and base station via this air interface, or out-of-band using another radio frequency e.g., in the 26 GHz spectrum.

In the prior art, 3GPP mobile networks of the second generation (2G), third generation (3G), and fourth generation (4G) are based on a strict separation between resources of the transport network and radio resources on the air interface. In 2G networks, the configuration of the base station is controlled via Link Access Procedure on the Dm Channel (LAPDm) signalling on the interface between the Base Station Controller (BSC) and Base Transceiver Station (BTS). This $A_{bis}$ interface is part of the transport network, as well as the A interface, which is used in 2G networks to convey data between the radio and core network via transport links. In contrast, on the air interface (Um) data are transmitted between the base station and the mobile station, but this interface is not used as backhaul link.

A similar network architecture is applied in 3G networks with the air interface (Uu) between the UE and the 3G base station (NodeB), while lu-interfaces are used on transport side. In the 4G architecture, the air interface (Uu) is used for the transmission of data between the UE and the 4G base station (eNodeB). Examples for transport network interfaces are X2 between eNodeBs and S1 between the eNodeB and the Serving Gateway (S-GW).

In 3GPP Rel. 16 [1][2] IAB is specified as an alternative transport connection for the 5G base station (gNB). IAB allows both connections, the backhaul connection of the transport network, and the radio connection to the UEs, to be realised via the air interface i.e., the radio link. Further IAB enhancements are introduced in 3GPP Rel. 17. Focus is set on topology redundancy to improve robustness, latency, load-balancing, and spectrum efficiency for improving the end-to-end performance of the IAB network [3][4][5]. Additional IAB enhancements are introduced in 3GPP Rel. 18 focussing on mobile IAB nodes i.e., vehicle mounted relays [6]. In the following the generic term "base station" is used to define this entity independent of the technology, including BTS, NodeB, eNodeB, gNB etc.

While in 4G and preceding 3GPP technologies, the link between the base station and the core network is often based on fibre connections or microwave, IAB provides the advantage that the backhaul (transport) link can be implemented in-band using the spectrum that is used to serve the UEs via the radio (air) interface. This aspect is used in the prior art for coverage extension e.g., by small cells. The concept of IAB can further be used in combination with active antennae and beamforming using the same frequency for IAB and radio connections to UEs located in different directions, as well as for providing the backhaul via IAB for moving cells that are not statically located, for example trains.

However, conventional base stations or conventional mobile telecommunication networks need to be modified in order to be used for or fulfil the requirements of ultra-high reliability networks. E.g. an ultra-reliable connectivity for specific applications in 5G and upcoming 6G networks requires failure rates of less than $10^{-7}$ corresponding to an outage of approximately three seconds per year.

It is the goal of the present invention to provide a superior base station or a superior mobile telecommunication network (as well as corresponding methods), especially with respect to its network reliability.

This is obtained by the base station comprising the features of claim 1, the method of claim 11 and the mobile telecommunication network of claim 13. Advantageous modifications are given in the dependent claims.

According to the invention, a base station for use in a mobile telecommunication network is provided, comprising an air interface adapted to establish an uplink data transfer and/or downlink data transfer with at least one user equipment of the network, a transport interface adapted to establish a transport link via an adapted air interface to another base station to the backhaul of the network, preferably wherein the transport interface is a microwave interface or an optical fibre interface, and a monitoring unit adapted to monitor a transport link established by the transport interface to the backhaul of the network, preferably wherein the monitoring unit is adapted to monitor the existence and/or the properties of the transport link established by the transport interface to the backhaul of the network, wherein the base station is further adapted, on basis of a monitoring result of the monitoring unit, to establish a transport link to the backhaul of the network via the air interface, preferably wherein establishing a transport link to the backhaul of the network by the air interface is made automatically on basis of the monitoring result of the monitoring unit.

The inventive base station comprises the ability of IAB, by allowing access to the backhaul via its air interface. However, in contrast to the prior art, a transport link to the backhaul via the air interface of the base station is established on basis of a monitoring unit monitoring the existence and/or the properties of the conventional transport link, i.e. the connection to the backhaul via the transport interface, typically via optical fibre or a microwave connection. Thus, the base station is adapted to establish IAB (a transport link to backhaul via its air interface) by itself depending on a monitoring result of the monitoring unit.

This is advantageous in various ways, as the base station is now capable of immediately reacting on a failure state of the conventional transport link, for example caused by a natural disaster or an intentional damage, which would have formally caused the base station to lose its access to the backhaul thereby making it impossible to obtain service for the user equipment connected to the base station. For obtaining this functionality, the inventive base station is equipped with or connected to a monitoring unit checking on the presence and/or properties of the conventional transport link typically realised by optical fibre or microwave. If the monitoring unit outputs a monitoring result which indicates that the transport link is faulty or broken, the base station is adapted to establish a supplemental transport link via its air interface. This allows to improve the reliability of the base station by maintaining its operational functionality despite there are impairments with respect to performance (as the air interface is no longer used exclusively for access of UEs but also for the connection to the backhaul).

Providing the monitoring unit and the capability of the base station to establish a transport link via its air interface by itself is also very beneficial in case of a natural disaster or a wilful attack in which the conventional transport link is damaged.

According to a beneficial modification of the present invention, establishing a transport link to the backhaul of the network via the air interface is initiated by contacting at least one adjacent base station lying in a coverage area of the air interface via an initiation message sent over the air interface of the base station.

Thus, the base station is adapted to send such an initiation message over its air interface in case the monitoring unit comes to a monitoring result proposing to establish a transport link via the interface of the base station. Wherein the base station can be adapted to send the initiation message over the same or different technologies, frequencies, sectors, or antenna beams to one or several base stations to reach out to a plurality of adjacent base stations lying in a coverage area of the air interface.

Preferably, the initiation message contains information requesting the establishment of a transport link between the origin of the sender of the initiation message and the backhaul of the network via the air interface of the base station.

The base station receiving the initiation message is now aware that the sender of the initiation message requires a transport link via the air interface of the base station receiving the initiation message.

According to an optional modification of the present invention, configuration data for establishing a transport link over the air interface of the base station to at least one adjacent base station lying in the coverage area of the base station are prestored in the base station.

Thus, in case the monitoring result indicates to establish a transport link via the air interface of the base station, the recipient of the initiation message is already known and it is not necessary to contact a plurality of adjacent base stations which would theoretically be able to establish a transport link via the air interface. Thus, the procedure of choosing the best base station out of a plurality of possible base station candidates for establishing the transport link via the air interface can be omitted, because, during network layout, the base station to which a transport link via the air interface is to be established has already been made.

According to a preferred modification of the present invention, the base station is adapted to send the initiation message to all or a plurality of adjacent base stations lying in the coverage area of the air interface and/or the transport link to be established via the air interface includes an OAM connection for the base station.

An OAM (Operations, Administration, and Maintenance) connection to a base station is a dedicated communication link used for managing and maintaining the base station. It enables network operators to perform essential tasks such as monitoring performance, configuring settings, updating software, troubleshooting issues, and ensuring the overall health and efficiency of the base station. This connection is helpful for maintaining a smooth operation and management of the mobile network infrastructure.

According to a further beneficial adaptation of the present invention, the base station further comprises an allocation unit for an optimal allocation of the transport link to one of a plurality of base stations lying in the coverage area of the air interface having received the initial message, preferably wherein the allocation unit is adapted to evaluate a plurality of potential transport links to be routed via different paths of adjacent base stations and to choose one or several of them, e.g. on basis of transport capacity, capacity of the air interface, radio propagation conditions and/or traffic load.

The person skilled in the art very well understands that this functionality can also be made by a different part of the network in which the base station is integrated. In case the transport link is not only routed via one air interface of a base station but a plurality of base stations, there exist different sequences of base stations over which the transport layer is routed. In this case the allocation unit considers the plurality of possible paths and chooses the path which is optimal with respect to some specific criteria, e.g. transport capacity, capacity of the air interface, radio propagation conditions and/or traffic load of each one of the paths.

According to a further optional modification of the present invention, when sending the initiation message, the base station is adapted to act logically as a user equipment using uplink resources of the at least one adjacent base station lying in the coverage area of the air interface to which the initiation message is to be sent. The base station acting as user equipment provides more capabilities than a standard user equipment. It offers less power limitations, enhanced Multiple Input Multiple Output (MIMO) capabilities, higher modulation and coding schemes (e.g. 256QAM or higher for the uplink) and can use beamforming depending on the antenna.

Thus, the base station sending the initiation message acts as a UE which is connected to the adjacent base station for transferring the initiation message to its destination. Thus, the receiving base station does not need to be modified in a certain way in order to be capable of receiving the initiation message.

According to a further preferred adaptation of the present invention, the initiation message is a preconfigured message stored in a base station which is to be sent via the air interface to at least one predefined address (of a neighbouring base station) after the result of the monitoring unit requires the establishing of a transport link over the air interface.

According to the scope of the present invention, it is further possible that the monitoring unit is adapted to monitor the transport link established via the transport interface with respect to its existence, a failure state and/or a congestion state, and/or the existence, a failure state and/or the properties of a link of the base station to a synchronization signal, in particular a satellite-based synchronization signal like a GPS-signal, necessary for synchronization of the base station for sending and receiving data via the air interface, wherein a monitoring result on the necessity of establishing a transport link via the air interface is made on basis of the at least one monitored link.

The present invention further relates to a method for operating a base station, preferably a base station of any one of the above discussed modifications, or a mobile telecommunication network, preferably a network comprising at least one base station according to any one of the above discussed modifications, comprising the steps of monitoring a transport link of a base station to a backhaul of the network established via a transport interface of a respective base station, preferably the existence and/or the properties of the transport link established by the transport interface to the backhaul of the network, and establishing or automatically establishing, on basis of a monitoring result of the monitoring, a transport link to the backhaul of the network via the air interface of a respective base station, preferably wherein the transport interface is a microwave interface or an optical fibre interface.

According to a preferred modification of the method, establishing a transport link to the backhaul of the network via the air interface by at least one base station is initiated by contacting at least one adjacent base station lying in a coverage area of the air interface via an initiation message sent over the air interface of the base station.

The invention further relates to a mobile telecommunication network comprising a plurality of base stations according to any one of the above discussed base stations, preferably wherein in each of the plurality of base stations a pre-configured initiation message for initiating a transport link via its respective air interface is stored that contains a base station dependent target address identifying an adjacent base station to which the transport link via its air interface is to be established.

This is beneficial as the destination base station can be pre-defined via network planning, or the connection is established to any of the base stations within the coverage area of the base station with the faulty transport link.

According to a preferable modification of the invention, the network is adapted to evaluate and to assign resources for the transport link via the air interface for at least one base station by jointly considering the complete chain of connections from a base station requesting a transport link via its air interface to the base station having a connection to backhaul via its transport interface ("conventional" transport link), preferably wherein different paths between the base station requesting a transport link via its air interface and the backhaul are compared with one another.

The invention further relates to a mobile telecommunication network, preferably a network according to any one of the previously discussed networks, comprising at least one base station having a transport link to the backhaul of the network via a respective transport interface of the base station, preferably wherein the transport interface is a microwave interface or an optical fibre interface, wherein the at least one base station has a redundant transport link to the backhaul of the network established via the air interface of said base station, preferably wherein the transport link via the transport interface and the redundant transport link via the air interface are maintained side-by-side. Both transport links are maintained concurrently.

The presence of a redundant transport link established via the air interface of the base station improves the reliability of the network and helps to fulfil the very strong requirements with respect to ultra-high reliability networks without the need of adding additional hardware. Thus, the reliability of the network can be improved by simply modifying the underlying software to permanently establish a redundant transport link via the air interface of the base station in parallel to the conventional transport link established via the transport interface. Although the redundant transport link is established, air interface resources shall only be occupied in case of a failure of the conventional transport link. Thus, the impact on the radio capacity, when the conventional transport link is available, is minimised.

Further features, details and advantages of the invention will become apparent from the following description of the figures. It shows:

Fig. 1:    a schematic diagram of a mobile telecommunication network comprising an inventive base station,

Fig. 2:    a diagram showing the components of an allocation unit,

Fig. 3:    a flow diagram indicating the steps for a recovery procedure and a dynamic adaptation for establishing a transport link via the air interface using radio capacity,

Fig. 4:    a schematic diagram of a mobile telecommunication network in which radio capacity and transport capacity is shared on the air interface, and

Fig. 5:    a schematic diagram illustrating a dynamic coverage extension of the mobile telecommunication network,

**The invention: A generic concept for the transport and radio connection in mobile communication networks**

This invention proposes full flexibility for the interconnection of base stations to the core network and Internet (also named backhaul) via conventional transport links or via the air interface and one or several other base stations. In this chain of base stations, also UEs can be used as transport link to forward data from one base station to another base station. For sake of simplicity, a UE acting as a router for forwarding data is also considered as base station.

The inventive concept extends prior-art solutions, in which the in-band transport link via IAB is used for coverage extension. Further, in the present invention, a complete cluster may be considered as an entire system, for which a joint capacity optimisation between all links is executed instead of local optimisations for each single network element.

**Procedure for the dynamic adaptation of radio capacity for radio and backhaul**

For the transmission of data on the air interface, data are separated into small units, so-called Resource Blocks (RBs). A resource block is the smallest scheduling unit occupying in 4G a bandwidth of 180 kHz and a Transmission Time Interval (TTI) of 1 ms. In 5G networks, smaller scheduling intervals can be used. According to their numerology, the 12 sub-carriers have a bandwidth of 180 kHz to 2.88 MHz. 3GPP TS 38.214 [7] specifies the symbol duration depending on the numerology e.g., 33.33 $\mu$s for uplink direction and 66.67 $\mu$s for downlink direction [8][9]. Multiples of this minimum number can be allocated.

With IAB or similar methods, radio capacity on the air interface (normally used for the data transfer between a base station and a UE) in terms of RBs can be exchanged by transport capacity (for establishing a data transfer to the backhaul). Any of these conventional methods shall be applied in the concept of the present invention (a) in case of a failure of the transport link and/or (b) during operation of the base station or cluster of base stations if not sufficient data can be conveyed via the existing transport links. The invention is neither limited to one sector or frequency of a base station, for which radio resources are used as transport link, nor to specific beams of active and/or passive antennae.

3GPP TS 38.300 [4] specifies for IAB a donor, which is typically the macro site, and a termination point. The invention allows to configure each site as donor or termination point. According to the transport capacity requirements, one or several beams of the antenna, one or several cells of the sector, or the radio resources of all sectors of the site shall be used for IAB. For the sake of simplicity, the term IAB is used to represent the shared utilisation of air interface resources as radio and transport link.

*(a) Recovery-procedure*

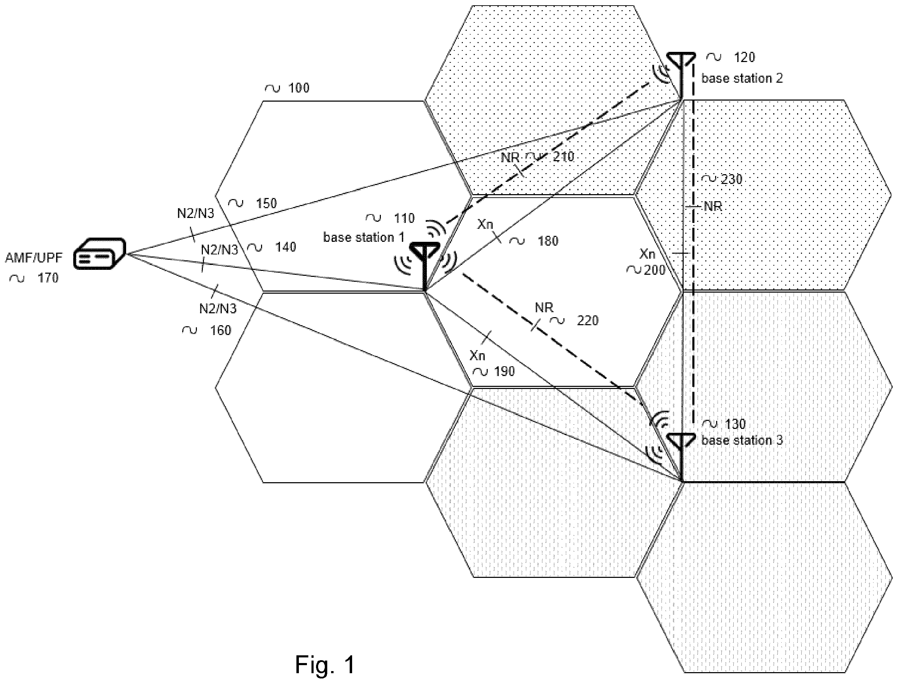

Figure 1 shows a part of a cellular 5G network (100) with three base stations, base station 1 (110), base station 2 (120), and base station 3 (130). However, the type of network used to explain the inventive concept on basis of the Figures is not restrictive for the invention. Each base station has a N2 interface (140, 150, 160) to the Access and Mobility Management Function (AMF) and a N3 interface to the User plane Function (UPF), representing the conventional transport link. Although logically separated, both network functions, AMF and UPF, are shown in one unit AMF/UPF 170. All three base stations are logically interconnected via the Xn interfaces 180, 190, and 200.

The starting point of the inventive idea is either a failure of the conventional transport link, e.g. implemented by fibre optics, or a missing transport connection, e.g. during the deployment phase of the base station. The considered base station with the interrupted or missing transport link (N2/N3, 140) is termed base station 1 (110). Still in operation and connected to a power supply unit, the base station 1 with the faulty or missing transport link (140) may scan the reference signals of the adjacent base stations 2 ... n on its air interface and measure the receive level of the reference signals. Figure 1 shows two adjacent base stations, base station 2 (120) and base station 3 (130). Next, base station 1 (110) can establish a connection via the air interface to any adjacent base station $i \in \{2; n\}$ within its coverage area, preferentially to the base station of the highest receive level assuming the lowest propagation loss. This is represented in Figure 1 by the New Radio (NR) air interface 210, in this particular case between base station 1 (110), acting as UE, and base station 2 (120). For connecting to base station $i$, the considered base station 1 (having the faulty transport link) can use the uplink resources for transmission and the downlink resources for receiving data. In a Time Division Duplex (TDD) system, this is achieved by a shift in the time-domain and in a Frequency Division Duplex (FDD) system by a shift in the frequency domain i.e., the base station 1 behaves logically like a UE offering enhanced capabilities compared to a standard UE for contacting base station 2.

After establishing the connection between both base stations 1 and base station i, base station 1 may, in a preferred modification of the invention, send a message to Operations, Administration and Maintenance (OAM, the term OAM is used to represent the processes and functions for provisioning and managing a network or element within the network), report the kind of failure of its transport link and request the establishment of IAB between base station 1 and base station i. The OAM service can also be realised via a Self-Optimising Network (SON) system. In both cases, an optimisation of the connection quality can be obtained by changing the tilt of the antenna and beam direction. In today's 5G networks, the tilt is typically configured semi-persistent i.e., it is configured by radio network planning or the SON system and kept until the next update. The new aspect is to continuously optimise the antenna tilt, aperture angle of the antenna, and beam direction for improving the connection quality, in particular between the two base stations 1 and i communicating via their air interfaces.

Thus, a message can be sent from base station 1 to base station *i* with the destination OAM (lying in the backhaul), i.e., base station *i* forwards this message to OAM. If base station 1 is the termination point, IAB shall be realised between base station 1 and base station *i*. Nevertheless, more than one IAB connection can be established between these two points e.g., one IAB connection in the low band (e.g. 700 MHz) and one IAB connection in the high band (e.g. 3500 MHz). This procedure can be applied for multiple sites for redundancy and capacity reasons.

The person skilled in the art very well understands that IAB is one of a plurality of options which can be used when carrying out the invention. It is clear that the concept of the invention is not limited to IAB and its protocols as any other option for the dynamic use of parts of the radio resources as transport link can be used, too.

Moreover, a joint capacity optimisation can be integrated, preferably coordinated from OAM, to identify the best suited base station *j* in the coverage area of base station 1. This joint capacity optimisation procedure can be done on any hardware used for OAM or any external hardware (also within the base station).

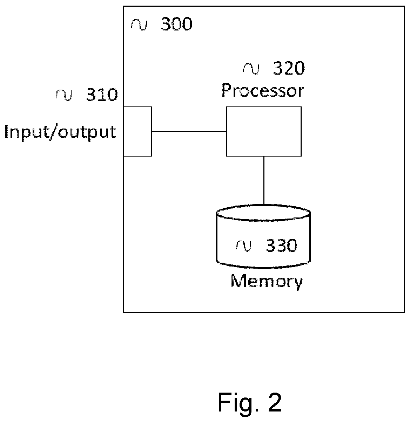

An example for an external unit 300 is shown in Figure 2, consisting of an input/output unit 310, a processor 320 and a memory 330. Radio network planning data imported via the input/output unit 310 shall be used to calculate the propagation loss between base station 1 and the other considered base stations 2 ... n. In a further embodiment of this invention the receive level measurements of the reference signals received at base station 1 from the surrounding base stations shall be used to calculate the propagation loss. The joint capacity optimisation also takes into consideration the capacity and current load of the transport link of each considered base station 2 ... n, as well as the capacity and current load on the relevant air interfaces of each sector of base stations 2 ... n that can be used for IAB with base station 1.

Since the base stations are inter-connected, their current average traffic load on the air interface and transport link shall be reported to base station *i* to allow a first identification of any better suited base station for IAB with base station 1. This procedure is explained below in the section "Joint-optimal allocation". Alternatively, the current load on the air interface can be queried indirectly by establishing a connection from base station 1 to an adjacent base station *i* and requesting specific Quality of Service (QoS) attributes. The result of the negotiation provides information about the current traffic load which can be evaluated by base station 1. As a result, the best suited base station in this cluster of sites can be selected for IAB with base station 1.

According to a preferred modification of this invention, a "first aid message" can be sent from base station 1 to plural or one of the adjacent base stations *i*. The important aspect is that this message is directed to base station *i* and includes the necessary information about the identity of base station 1 and frequency band to establish IAB between base station *i* and base station 1. Usually, the receiving base station *i* performs channel decoding and forwards the contents of the message to the final destination e.g., a server of the Internet. In this case the information that the destination of this message is the receiving base station shall be encoded using the channel coding bits. In the channel decoding process, the base station *i* reads this information and is informed to establish an IAB connection to base station 1. Configuration data for establishing IAB may already be pre-stored in each base station. Optionally, this message shall be forwarded from base station *i* to OAM or any other predefined destination to run the joint-optimal allocation procedure. This solution, in particular the pre-stored configuration data, is beneficial especially for ultra-high reliability networks, for which only very short outages are tolerated. Channel decoding is a very fast process and is executed locally at the base station.

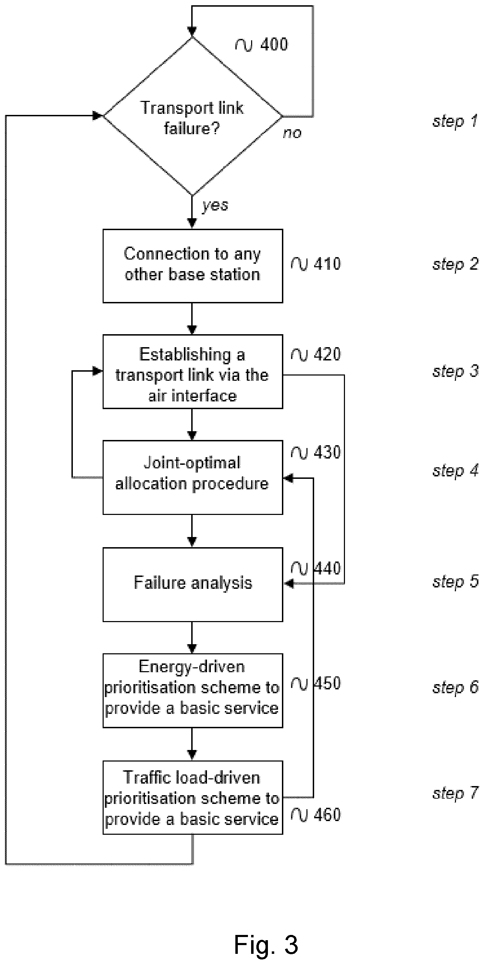

Figure 3 shows the steps which may be executed for recovery and dynamic adaptation of radio capacity by transport capacity.

| | |
|---|---|
| Step 1 : | Identification of a transport link failure or missing transport link by the base station, i.e., a monitoring unit has realised that connection attempts to other network entities over the transport link fail; the only existing interface is the air interface. This query 400 is represented in step 1 in Figure 3. |
| Step 2: | The considered first base station establishes a connection via the air interface to a second base station in the coverage area of the first base station and sends autonomously a "first aid message" reporting the identity of the first base station and optionally the failure type. Relevant data for establishing IAB to this first base station shall be included in this message. The procedure 410 is represented by step 2 in Figure 3. |
| Step 3: | A transport link (which may include an OAM connection) is established between the first base station and the second base station by using IAB or a similar procedure allowing the first base station to convey its user traffic via this newly established transport link on the air interface to the second base station. The second base station then forwards the received data from the first base station towards the core network and Internet (= backhaul). A bypass for the non-functional conventional transport link of the first base station is established via a connection to an adjacent base station using the air interface instead of the transport interface (fibre optics or microwave) The procedure 420 is represented by step 3 in Figure 3. |
| Step 4: | Optionally, a joint-optimal allocation procedure 430 shall be executed to identify the best-suited base station *i* for the IAB connection to the first base station, termed base station 1. If a better path for the connection is identified, the transport connection via the air interface shall be switched from base station i to the better suited base station *j* and IAB shall be used from that time on between base station *j* and base station 1. The switch of the connection includes a disconnection of the IAB connection between base station 1 and *i* and an establishment of the IAB connection between base station 1 and *j*. The decision to switch the existing data route can be made by the first base station or a different component in the network. The procedure 430 is represented in step 4 in Figure 3. |
| Step 5: 6: | Optionally, a remote failure analysis of the initial conventional transport link of base station 1 shall be executed to identify whether the base station is working properly, whether an auto-recovery procedure can be triggered, or remote repair can be executed. In this procedure it shall be checked whether base station 1 is still connected to the power supply unit and whether sufficient electrical energy is available e.g., from the battery pack if the connection to the main power supply failed. The procedure 440 is represented in step 5 in Figure 3. if the connection to the external is the |

(continued)

| | | |
|---|---|---|
| Step | | Optionally, power supply broken, amount of available energy via the battery system shall be identified. Based on the intended duration to operate the base station in an emergency service mode and the known energy consumption for different technologies and layers, the services offered by the base station shall be reduced with the aim to reduce the total energy consumption and provide only some basic services on specific layers and technologies. As is known, the total power consumption of a base station consists of the basic power consumption and |
| | | a load dependent part. Power savings are achieved by deactivating components of the base station e.g., layers of a technology or complete technologies. A layer represents for example one carrier using a specific frequency band. Today's 4G and 5G networks typically use several carriers per technology and a deactivation of one or several carriers reduces the power consumption of the base station by approximately 100 W to 200 W per carrier. Also, for an activated carrier, power can be saved by switching off the power amplifier during TTIs (4G), slots or symbols (5G) for which no data are scheduled. Hence, the power consumption of the base station also includes a traffic load dependent component, which typically amounts around 50% of the total power consumption of the base station. The procedure to maintain a skeleton service for a certain time is further described in the below explained sections "Prioritisation scheme to maintain a basic service during the emergency situation" and "Application in disaster situations". The procedure 450 is represented in step 6. |
| Step 7: | | While step 6 handles the restrictions with respect to the energy consumption of the considered base station, a further limiting factor comes into play concerning the traffic load of all entities in the considered IAB chain. The complete chain does not only include the first and the second base station, but it can also be extended to further base stations and UEs used for IAB or similar methods and is described more detailed in the section "Application for dynamic coverage extension". The procedure 460 is represented in step 7 in Figure 3. |

Since parts of the radio capacity on the air interface are exchanged by transport capacity when IAB or a similar method is used, a reduction of the amount of traffic might be necessary to avoid congestion on the air interface. The algorithm for traffic reduction is described in the below section "Prioritisation scheme to maintain a basic service during the emergency situation". The resulting lower bandwidth requirements can be used as input to the joint-optimal allocation procedure described in step 4.

*(b) Prioritisation scheme to maintain a basic service during the emergency situation*

Since parts of the radio capacity are moved to transport capacity, the radio capacity on the air interface will be reduced. For avoiding congestion on the air interface, this algorithm can include the decision, which services and parts of the previously provided functionalities to omit. The decision for service reduction can include one or several of the following:

- The capacity and the current traffic load on the air interface considering the whole chain of air interfaces of this path.
- Capacity and current traffic load on the conventional transport link that connects the last base station of this chain with the core network and Internet.
- Classification of services to be maintained as basic service with a service priority marker e.g., speech services as priority 1 services and entertainment services as priority 5 services. The differentiation can be done on basis of the 5G QoS Identifier (5QI) / QoS Class Identifier (QCI).
- Definition of the *service priority level* for which services shall be omitted for reducing the traffic load on the air interface. This level can be adapted dynamically depending on the current traffic load. Services of this or higher priority level can be omitted, while services of lower priority level can be maintained e.g., speech services defined by priority level 1 in this example.
- Definition of a *user priority level* for which service requests are rejected by admission control: Prioritised users e.g., ambulance shall still be admitted, while admission control refuses service requests from Subscriber Identity Module (SIM) / Universal Subscriber Identity Module (USIM) / embedded-SIM (eSIM) cards associated with a lower user priority. The differentiation can be done for example via the QoS attribute Allocation/Retention Priority (ARP).
- Classification of technologies and frequency bands of each technology with a *layer priority marker,* e.g. layer priority 1 for the 2G network, layer priority 2 for the 4G network using the 800 MHz band as 4G coverage layer, layer priority 3 for the 4G network using the 2600 MHz band as 4G capacity layer, layer priority 4 for the 5G network using the 700 MHz band as 5G coverage layer and layer priority 5 for the 5G network using the 3500 MHz band as 5G capacity layer.
- Definition of the *layer priority level* for which carriers are excluded from deactivation for energy saving reasons. Radio data can be transmitted via theses carriers i.e., this frequency band is not exclusively dedicated as transport layer on the air interface. If the *layer priority level* is set to 2, only the 2G network and the coverage layer of the 4G network are continuously activated in this example, while the other layers of the network might be deactivated to reduce the energy consumption and capacity.

Further decision criteria:

- Definition of the radio bandwidth that must be reduced for using parts of the air interface spectrum for transport capacity. The decision can be based on the results of the joint-optimal allocation strategy.
- Decision in which frequency band or frequency bands the bandwidth reduction shall be executed. This decision shall also take into consideration deployment aspects, the policies of the network operator and its customer requirements. For a coverage site, continuous operation in the low frequency band is important and the redundancy aspect obtains a high weight in this decision process. The concept of the invention is not restricted to specific frequency bands, but it may take environmental and weather conditions into account. Diffraction of electromagnetic waves in rain is high for high frequency bands, for example for the 26 GHz band. Therefore, the allocation of transport capacity on the air interface shall be done preferentially in mid-band or low-band frequencies and not in the high-band frequencies.
- Decisions on the services that must be skipped can also be based on the amount of resources required for these services.

The decision to allocate transport capacity on the radio interface shall not be limited to the use of beamforming for IAB. Beamforming is just one option, in another scenario, the whole carrier operating in a specific frequency band or parts of its resources shall be used for configuring transport capacity on the air interface. In a further embodiment all carriers of the sector are dedicated to transport traffic. The benefit of using beamforming is that the coverage will not be reduced.

*(c) Dynamic adaptation of the air interface resources assigned to transport traffic*

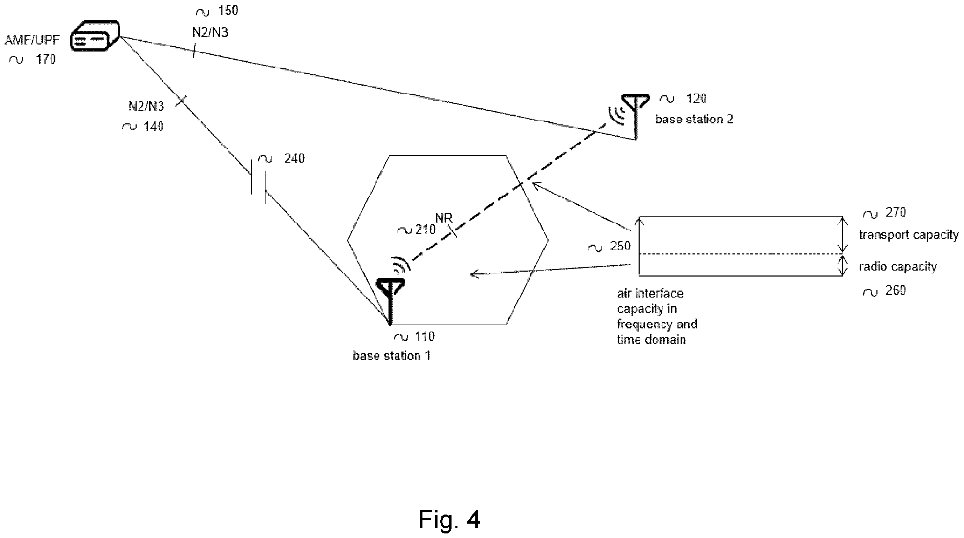

In a further preferred modification of this invention, a certain amount of air interface resource blocks in the frequency domain is dedicated to transport capacity, and/or a dedicated amount of TTIs, slots, or symbols in the time domain is dedicated to transport capacity. This aspect is shown in Figure 4, which represents a part of the network shown in Figure 1. The broken conventional transport link between base station 1 and AMF/UPF is shown at reference sign 240 in Figure 4. Data are now conveyed from base station 1 (110) via the air interface 210 to base station 2 (120) and from base station 2 via the conventional transport link 150 to AMF/UPF. The split of the air interface capacity 250 into radio capacity 260 and transport capacity 270 is demonstrated in Figure 4. The amount of air interface resources dedicated to transport capacity is not fixed and can be adapted dynamically e.g., based on the result obtained by an allocation unit which is preferably performing a joint-optimal allocation strategy. For example, at first, one slot of the uplink slots of a TDD uplink-downlink configuration shall be used for transport capacity while thereafter an adaption of the air interface resources to two uplink slots for transport capacity (see 3GPP TS 38.213 [8]) shall be done.

*(d) Adaptation to the best suited technology*

The invention may also include an automatism to adapt the procedure to the best suited system and technology. An example of a base station in a hilly terrain or woodland area shall be considered as a further example. Signals of the next adjacent base station can be received only in the low frequency band e.g., in the 700 MHz spectrum. Radio planning data for the reconfiguration of radio resources into transport resources is taken into consideration and the wireless transport link can be established on a suited frequency band e.g., in the low-frequency spectrum. Also, an adaptation of the technology can be considered (e.g., by an algorithm) to decide on allocating the transport resources in the spectrum of the 4G cell, 5G cell or any other technology.

For capacity sites i.e., base stations with the focus on extending the capacity of the network rather than its coverage, it can be defined whether the site remains deactivated after a transport link failure or whether it shall be partially loaded e.g., by up to 50%. A communication can be considered to keep the information up to date.

*(e) Procedure for the prioritisation of services to cope with reduced air interface capacities*

In an emergency situation e.g., due to a disaster, the invention allows to provide and maintain a minimum service level when power supply is still intact or a battery pack for the power supply or power generators can be used. The present invention offers a procedure to reduce the services for shaping the capability of the network to the available configuration. This includes but is not limited to the reduction of the services to one technology e.g., offering only GSM speech services via the air interface by using the air interface e.g., the 5G air interface, as transport link. With this prioritisation of services, the energy consumption of the base station can be controlled, and it becomes possible to maintain a minimum service level for a long time while the base station is operated in battery mode i.e., with interrupted external power supply.

In another configuration, the 3.5 GHz band can be used as transport link and the 700 MHz spectrum can be used for the radio link, while the other bands are switched off. This implies a service quality degradation, as the traffic must be reduced to a smaller bandwidth.

*(d) Power ramping*

In a preferred implementation of the invention, power ramping is applied on the new frequency to identify the necessary transmit power via a feedback-loop between the sending unit and the receiving unit. Transmission starts at low transmit power which will be increased in defined steps until the necessary transmit power level is reached.

*(e) Coverage range extension*

In all the scenarios described above it might be necessary to extend the coverage range for establishing a connection to the remote (adjacent) base station. A multi-step procedure can be applied if the receive level is not sufficiently high to use a link to an adjacent base station for establishing a transport link via the air interface. This multi-step procedure can also be executed if the receive quality is poor and a concentration of the radiated energy into a smaller beam is necessary or the radiated electromagnetic waves can be better directed to the receive antennae e.g., by changing the tilt of the transmit antennae but also of the receive antennae. This change of the tilt shall be done remotely via Remote Electrical Tilting (RET) mechanisms (3GPP TR 32.804 [10]).

The algorithm can also consider the technology to be used for the wireless transport link e.g., via beamforming or using other mobile systems apart from the 3GPP standard e.g., Wi-Fi connections.

*(f) Overpowering of the transport link via the air interface*

To increase the coverage also power boosting techniques like overpowering can be applied. In many cases, the available downlink transmit power is equally distributed among the physical resource blocks to be transmitted at a given time. Overpowering includes an unequal distribution of the available power and allows to increase the transmit power for specific physical resource blocks, while lower power is used for other physical resource blocks.

If the equally distributed maximum transmit power is not sufficient for the connection to the remote (adjacent) base station, radio resource management shall allocate less resources on TTIs, slots and symbols that are not assigned for the transport link but use higher transmit power on the resource blocks of the transport link. If necessary, the transmission of data via the transport link shall be spread in the frequency domain to concentrate the transmit power in the time domain on a few resource blocks.

In uplink direction, power control is used in 4G and 5G networks. As the uplink power is limited and typically lower than the downlink transmit power, also in uplink direction radio resource management shall spread the transmission in the frequency domain. Overpowering in the uplink power control algorithm shall preferentially be done via the Transport Format (TF) dependent offset $\Delta_{TF}$ [8] that is used to consider different Signal to Interference and Noise Ratio (SINR) requirements for various Modulation and Coding Schemes (MCS). Alternatively higher uplink power shall be achieved by the power correction value $\Delta_i$ or $\delta_{PUSCH}$ [8] provided by the closed-loop component of the uplink power control algorithm. Preferentially a guard band is configured between radio capacity 260 and transport capacity 270 in Figure 4 due to the much higher transmit power of base station 1 sending its transport data to base station 2 over the link 210 and receiving uplink data from the UEs using typically lower transmit power.

*(g) Protection against disturbance and interference*

In case of an active disturbance of the system or interference, an automatism shall be used for switching to a configuration that assigns less resources in the time domain for a TDD system or less resources in the frequency domain of a FDD system. Also, a switch from TDD to FDD or vice versa can be considered in the algorithm for the purpose of stabilising the transport link on the air interface.

The final target of this concept is to remove the separation into transport and radio networks. In deployments that reach a high density of base stations operating in the 26 GHz frequency spectrum, a dissolution of radio and transport links can be achieved. This allows for very fast reconfigurations.

**Distinguishing from prior-art solutions**

In the prior art, IAB is used for coverage extension and for filling coverage holes by cell densification. It is also used for providing infrastructure on demand for example for temporary events, as well as for providing indoor coverage by outdoor base stations. In these applications, IAB is configured manually, an automatic procedure is not used.

The present invention makes use of the specific concept of IAB in its generalised concept for the transport and radio connection to overcome technical problems in existing mobile communication networks:

1. As temporary backhaul solution by introducing a recovery procedure for transport link failures e.g., by using one antenna beam as transport link.
2. As additional dynamic transport capacity.
3. As fixed configured redundant transport link for ultra-high reliable networks.
4. As temporary backhaul connection.
5. For a dynamic adaptation of the resources between the transport link and air interface.

The advantage of the present invention is its applicability in already deployed radio networks. After a failure of the conventional transport link has been determined (by a monitoring means) the reconfiguration can be executed by software and/or accordingly adapted hardware, respectively.

**Extension of the recovery procedure**

The base station having a failed or missing "conventional" transport link informs the adjacent base station sites about this issue. Once the connection between both neighbouring base stations is established, the first base station with the faulty transport link can optionally request to transfer the transport traffic of other technologies (e.g. optical fibre or microwave) via the air interface transport link e.g., the traffic of its 2G, 3G, 4G, or Sixth Generation (6G) technology, if the 5G air interface is used as in-band transport link.

Consequently, the transport traffic for these technologies is routed via the air interface instead of the transport interface used before. The considered base station serves the UEs in its coverage area, receives data in uplink direction from the UEs and sends these data via the transport link on the air interface to the remote base station. The remote base station conveys these data via its transport connection to the core network (= backhaul). In downlink direction, data are sent from the core network via the transport network to the remote base station and from the remote base station to the considered base station via the transport link on the air interface. Channel encoding can be done in the considered base station for sending these data via the radio air interface to the UE.

**Joint-optimal allocation**

For the decision on assigning transport resources on the air interface, the resources to be assigned on a first interface - the air interface - and a second interface - the conventional transport interface can jointly be considered for the whole chain of interfaces. In this decision process the data rate and/or transmission requirements requested by the users can be taken into consideration. The relation between resources to be assigned on the air interface or even several air interfaces as a chain and/or resources on the conventional transport interface can be considered, while the traffic of already existing connections can be considered for the decision on using parts of the air interface for transport traffic. This joint-optimal allocation can be done for several variations of the path, i.e. for establishing the transport link via the air interface from the first base station A of broken conventional transport connection to the nearest second base station B via base station C to base station D or for selecting other base stations using the path A → E → C → D or any other path, e.g. A → F → G. The last point is the base station, from where all aggregated traffic of all connected base stations is routed via the conventional transport link. In this joint-optimal allocation, the benefit for all connections shall be maximised.

The method for allocation of radio resources for a data transmission in a radio communication system presented in EP 1 453 339 [11] can be generalised on multiple air interfaces and applied in step 4 of the flow diagram presented in Figure 3. In a further beneficially modified version of the invention, the first interface is the air interface between two base stations, wherein one base station behaves like a UE i.e., uses the uplink transmission capacity and a second base station operates in the traditional way using the downlink capacity for data transmission. On this first interface, packet data channels are allocated and modulation and coding schemes with different user data rate are assigned. The amount of transmission resources assigned on the second interface depends on the user data rate realised on the first interface. The latter depends on the assigned modulation and coding scheme, which depends on the prevailing radio channel conditions.

For the assignment of resources on the first interface, the transmission capacity in each direction shall be considered. This aspect is important for TDD systems using an unequal number of slots for uplink and downlink transmission and depending on the symbols configured for both directions in the special slot S.

The utility of a user is defined as the quotient of achieved data rate and requested data rate, wherein the achieved data rate can be calculated from the maximum data rate of the selected modulation and coding scheme, the number of resources assigned to the considered user, and the retransmission rate. The requested data rate can be derived from the Quality of Service parameters requested for this connection. If no specific data rate has been requested, a default value defined for the related QCI/5QI of this connection shall be used. The minimum of the quotients of achieved data rate and requested data rate for all users is defined as the utility of all users. Preferentially the utility for all users will be optimised such that the utility for all users reaches a maximum. This means that the smallest quotient of achieved and requested data rate of a user is maximised. Thus, guaranteeing that all considered users achieve the same ratio of their requested data rate.

At connection setup the user i requests a target data rate $R_i^*$ that shall be achieved. If a minimum data rate $R_i^{min}$ is defined for a specific user *i* that must be maintained, this minimum data rate for the user shall be considered as edge condition in the optimisation procedure of the utility of all users. This procedure guarantees that this minimum data rate required for the performance of the service will also be maintained at high traffic load.

The utility for all users can mathematically be exactly determined e.g., via linear optimisation. The utility $U_i$ is a measure for the satisfaction of a user *i* and is defined by $U_i := R_i / R_i^*$ with $R_i$ as the achieved data rate and $R_i^*$ as the requested or target data rate. In the resource assignment procedure the assignment matrix $(p_{i,j})$ is determined, which optimises the utility $U_i$ for all users, $i \in \{1, ..., N\}$. As it is not possible to increase the utility $U_i$ for one user *i* without decreasing the utility $U_k$ for all other users k, the utility for all users is defined and shall be optimised. The utility $U$ of all users is defined by $U = F(U_1, ..., U_N) := Min\{U_1, ..., U_N\}$. Thus, for the optimisation of the utility of all users $U$ the utility of the user *i* is maximised that has the lowest utility $U_i$. Thereby it shall be considered that the requested target data rates are different for the individual users. In a mathematical expression it means to maximise the function $(p_{ij}) \rightarrow Min\{U_1(p_{i,j}), ... U_N(p_{i,j})\}$, i.e.

$Max_P\{Min\{U1(P), ..., U_N(P)\}\}$ with the edge conditions $\sum_{j=1}^{K} p_{i,j} = 1$ for all resource blocks <j>, $0 \leq p_{i,j} \leq 1$, and $R_i \geq R_i^{min}$ for all users $1 \leq i \leq N$. If the session of a user is terminated, the assignment of the resources for the remaining users shall be recalculated.

This procedure or any other mechanism to optimise the configuration can also be applied if the conditions change e.g., due to air interface bandwidth changes or capacity requirements from a changing traffic load. For this purpose, a dynamic adaptation of the resource share between radio resources and transport resources on the air interface can be implemented, preferably on basis of the amount of data requested by the UE connected to the considered base station and/or the transport and radio capacity of the considered base station and/or the prevailing radio channel conditions on the air interface on which a transport link between the base stations is established.

**Application to achieve ultra-reliable connectivity**

Ultra-reliable connectivity for specific applications in 5G and upcoming 6G networks requires failure rates of less than $10^{-7}$ corresponding to an outage of approximately three seconds per year. This target can be achieved via multiple redundancies. Assuming an outage of 3% for a non-redundant system, the outage can be reduced to approximately $10^{-3}$ using two links with uncorrelated channels. For five uncorrelated links, an outage of less than $10^{-7}$ can be achieved. Multiple redundancy applies to OAM connections (which are typically part of the transport link), as well as the transmission of user data for the considered application.

In one preferred optional adaptation of the present invention, redundant OAM connections (or redundant transport links capable of containing a respective OAM connection) via IAB or similar techniques are configured. In this case the base station can be connected via its conventional transport link to the core network, to OAM and servers of the Internet and, in addition, a redundant transport link with an OAM connection can be established via the air interface to an adjacent base station, wherein this redundant OAM connection shall be kept. In case of a failure of one transport link, the redundant transport link can immediately be used thus reducing the outage duration especially for high-reliability networks. Hence, the risk of unavailability due to transport failures is reduced by means of software instead of deploying additional hardware.

A use-case is an Internet of Things (IoT) device used as door-opener for an electronical entry control system of critical infrastructure. Even if the fibre connection (conventional transport link) fails, the messages sent and received by this device can be delivered. If a battery backup system is deployed, messages can be transmitted via the air interface towards the surveillance centre. Further applications are autonomous driving and applications of the tactile Internet.

This invention may provide redundant OAM connections via physically separated links - via the traditional transport link and additionally via a different transport link established by the air interface - to increase the availability and reliability of the system. The traditional OAM connection can be realised as Internet Protocol Security (IPSec) tunnel that is established via the conventional transport link to the Security Gateway and from the Security Gateway to the Data Communication Network (DCN). As an example, it allows configuration changes of the base station to be remotely executed from OAM. Cloud Radio Access Network (RAN) systems typically use Transport Layer Security (TLS), an encryption protocol for secure data transmission via the Internet.

According to the presented invention, OAM data can be transferred to and from the base station or specific parts of the base station or other network entities. A routine can be provided to read data immediately from one of the redundant links if a failure of the primary OAM connection occurs. Also, in case of erroneous or distorted packages, data can be read from the redundant link.

## Application in disaster situations

Another advantage of the present inventive concept allows to maintain a skeleton service for a certain period in case of a disaster situation. In case of a natural catastrophe, an environmental catastrophe, or flood disaster, an ad-hoc network can be established by the inventive base station or network. Power supply for the base stations can be provided by emergency power generators. According to one embodiment of this invention, the base station can autonomously establish an IAB connection to an adjacent base station as described above. Thus, the traffic generated by this base station can be hauled to its destination in situations in which the fibre connection is destroyed.

This concept is an intrinsic solution, mostly independent of external effects and thus beneficial in emergency situations. The self-recovery procedure described in this invention configures the transport link to the next base station autonomously. Broadcast services can be executed and in case of vandalism the system-critical infrastructure can be kept alive. Even if the fibre connections of all mobile operators in a specific area are destroyed, radio for authorities can still be offered.

## Application for dynamic coverage extension

In a further embodiment of this invention, a concept is proposed to dynamically extend the coverage range of a mobile communication network using device to device and device to infrastructure communication with flexible transport and radio connections. Active antennae are typically not used in UEs i.e., beamforming is not applied. In contrast, antennae installed in cars have the possibility to use beamforming. The traditional way is the separation of the functions of base stations and UEs. However, it is also possible to use a mobile terminal in a car with an antenna on the roof of the car acting as a base station. In this case the car acts as a repeater and the following procedure shall be used to connect the UE via IAB to the base station.

*(a) Procedure:*

If the radio channel conditions degrade e.g., when moving towards the cell border, usually an additional base station would be required to provide seamless coverage. In the presented concept, the coverage gap shall be closed by a chain of cars with mobile devices acting as base stations. Note that state-of-the-art terminals are equipped with several receivers. Therefore, the mobile terminal can act as base station but still use its mobile phone character by sending and receiving data via the other transceiver.

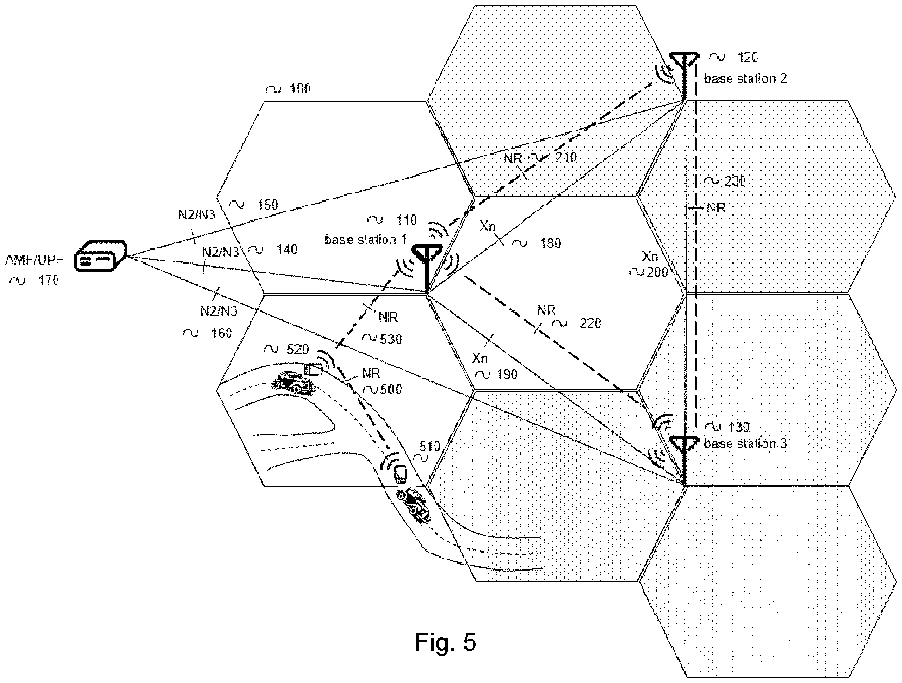

Figure 5 shows a related scenario. For closing the coverage hole, an IAB connection 500 shall be established between the car with a mobile device 510 leaving the coverage area of the base station and a second UE, preferentially an in-car UE with active antennae on the roof of the car 520. This second UE 520 operates now as a base station. It receives in uplink direction data from the first UE 510 and forwards these data via IAB on the air interface 530 to base station 1 (110). In downlink direction it receives data from base station 1 via IAB and forwards these data to the first UE 510.

If the radio channel conditions of any of these connections $UE_1$ (510) to $UE_2$ (520) or $UE_2$ (520) to base station 1 (110) become worse e.g., because the distance between both UEs becomes larger or $UE_2$ moves away from the base station, a reconfiguration of IAB shall be triggered e.g., by switching the connection to another UEs instead of using $UE_2$, or by adding a further $UE_4$ into the chain. By this the UE will be capable to establish a complete chain for IAB operation. Preferentially, the joint-optimal allocation described in this invention is used to select the best suited UEs for the chain of IAB connections. This procedure allows to close coverage holes by using a certain number of cars with mobile terminals. The important aspect is that the usual car, train, bus, ship, or aircraft traffic can be used to fill the coverage hole instead of deploying new base stations in poorly covered areas.

The presented solution also distinguishes from ad-hoc/MESH networks [12], which do not use IAB.

In one preferred modification of the invention, the uplink receive signal shall be decoded by more than one base station, thus taking benefit from diversity effects in a multi-path propagation environment. Especially in the frequency range of 3.5 GHz and above, diffraction of electromagnetic waves is considerably high, and data transmitted via the air interface might be received erroneously. Using different receive paths, which are locally separated to achieve space diversity gains and/or using different frequencies to achieve frequency diversity gains and/or timewise separated to achieve time diversity, allows to improve the probability of correctly decoding the transmitted data. The presented invention proposes to assign uplink resources in several cells of the same sector, or of the same base station, or of different base stations in the coverage area of the UE and to combine the received signals.

*(b) Additional requirements for dynamic coverage extension*

- **Billing**: For the acceptance of this mechanism, the UE that provides the interconnection shall not be charged for the forwarded data. A trigger shall be used to exclude the amount of forwarded data from billing and from its impact on the contractual data volume.
- **Liability**: Since the user of the UE that acts as relay station is not aware of the content of data that are routed via his UE, this aspect shall be considered in the discussion of legal aspects.
- **Data protection**: Special focus must be set on ciphering of data routed via the relay UE. A secure mechanism must be used for protecting from data theft, and to guarantee data integrity and data security. For IAB preferentially the same security mechanisms shall be applied as for the related radio technology (e.g., 4G, 5G).
- **Admission control**: The number of connections using IAB or similar mechanisms shall be limited to maintain a minimum performance level of the existing connections. In the radio resource management procedures, admission control shall be extended by a further criterion that counts the number of connections using transport capacity via the air interface. In combination with the QoS requirements for the served connections and new service requests, a prioritisation scheme shall be used that rejects further UEs if the defined quality level cannot be maintained or that downgrades the quality level of existing services for the allocation of a new service request. The available capacity on the air interface as well as the service requirements shall be taken into consideration for this extension of the admission control procedure.
- **Resource assignment**: Dedicated frequencies and/or dedicated slots and symbols in the time domain shall be assigned to a UE acting as relay for data transmission, while it communicates with other UEs via other frequencies and/or slots and symbols to avoid mutual interference. Alternatively, different frequency bands shall be used for a thorough decoupling of resources.

**Fast radio network deployment before completion of the final transport connection**

In some network deployments it is beneficial to bring the base station into service already before finalising the deployment of the transport infrastructure. Typical scenarios are clusters for which the fibre link is not yet available for all sites or new site deployments with difficulties in the transport infrastructure. The concept described in the presented invention allows to operate the base station by using an in-band transport connection.

**Further applications**

**Remote control for missing synchronicity**

In a typical network deployment, the base station is connected via the transport link, typically fibre optics or radio link (e.g., via microwave) to a router of the transport network. This router has a direct link to the Primary Reference Time Clock (PRTC). Thus, the synchronisation signal and the absolute time are available and can be transferred from the PRTC to the connected base stations. Degradation of the accuracy of time synchronisation or even loss of external synchronisation can occur by an interruption of the connection between the base station and router with the PRTC e.g., due to failure of the microwave equipment or break of the fibre optic cable.

Cellular networks operating in TDD mode have stringent time synchronisation requirements to avoid uplink transmission while the neighbouring cell operates in downlink mode and vice versa. This is particularly important for UEs at the cell border. Time error requirements between a PRTC and end application are specified in Table 1 of International Telecommunication Union - Telecommunication (ITU-T) G.8271/Y.1366. For the level of accuracy class 4, the time error requirement is $\pm$ 1.5 $\mu$s. Lower time error is recommended. In the high frequency range of 26 GHz, even more stringent requirements are used.

If the connection to the Global Positioning System (GPS) signal is interrupted or if the GPS signal is intendedly interfered, time synchronisation tasks are taken over by an internal oscillator. The accuracy of the synchronisation can be maintained for a limited time, typically in the range of 12 hours. If the connection to the master clock cannot be re-established or a connection to another clock cannot be established within this period, an automatic shut-down process of the base station is initiated to avoid interference to and from adjacent cells.

Based on the method presented in this invention the link to the PRTC can be re-established via IAB and remote control for corrective maintenance of the base station can be provided.

**Remote deactivation in case of missing synchronicity**

If the conventional transport link is interrupted, also the connection to the PRTC might be missing and the base station runs out of synchronicity. A remote configuration and operation of the base station is not possible due to the missing OAM connection. The base station, however, is still connected to the power supply and radiates electromagnetic waves before it is automatically shut down due to missing synchronicity for a specific period of time using TDD mode.

For avoiding interference caused by an unsynchronised base station, an OAM connection shall be established via the air interface e.g., by using IAB. If the recovery mechanism presented in this invention cannot be executed by the first base station with the interrupted OAM connection, an automatism shall be executed triggered by the adjacent base stations. An adjacent base station - the second base station - can establish a connection to the first base station and send a message to the first base station that contains the relevant data to configure an IAB link between both base stations. An OAM connection shall be configured via this IAB link and remote control of the first base station can be done by OAM. This procedure is not limited to IAB and shall be applied also for other redundant link configurations.

In a further embodiment of this invention, a shut-down of the first base station shall be triggered via the message sent from the second base station. This action shall be executed if the first base station with the interrupted transport link cannot be remote controlled but interferes the network. For this purpose, different messages for various actions shall be configured in a base station. If necessary, the relevant message shall be sent from this second base station to the first base station. During channel decoding the relevant information e.g., a shut-down command can be extracted by the first base station and shall be executed for this first base station. This mechanism can also be applied as a defence against criminal attacks.

**IoT applications**

In dense urban areas, basement storeys are often poorly covered but also some areas in the streets have poor coverage, even for the coverage layer. The procedure described in the presented invention shall also be used for IoT systems e.g., for Narrow-Band IoT (NB-IoT): If the NB-IoT device does not obtain coverage from the base station, it shall establish an IAB connection to another UE and send an emergency message. The connection between the NB-IoT device and the base station shall be established and kept via an additional UE. The NB-IoT shall send the data e.g., counts of an electronic domestic supply meter via the UE in the street to the base station. The UE is in the coverage area of the NB-IoT device and closes the coverage gap between the base station and the NB-IoT device. If the UE moves, a connection to another UE shall be established for the transmission of further data. In contrast to the device-to-device communication in 5G networks, the UE shall behave as a base station towards the NB-IoT device and an IAB connection shall be established between this UE and the NB-IoT device. In a further embodiment, the joint-optimal allocation procedure can be applied to identify the best suited UE for this IAB connection.

**Cross-operator transport configuration**

In a further embodiment of this invention, the dynamic allocation of transport resources on the air interface is not limited to one operator. If the transport link for a base station of operator A fails and there are no options for establishing a transport connection via the air interface to another base station of the same operator, a connection to the base station of a second operator B shall be setup to negotiate the use of parts of the radio resources of operator B as transport link to and from the base station of operator A. Examples are isolated private networks, industry applications, or white-spot/grey-spot sites.

Based on the presented recovery concept, an automatism can be provided, in which base station A scans the frequencies of other operators' base stations and measures the receive level and quality of the reference signals. If signals of the base station of a second operator B can be received at the position of the base station of operator A, the considered base station of operator A with the faulty transport link shall behave as a UE and setup a connection to the base station of operator B using the frequencies of operator B. The destination can be a server or OAM for which both operators agree to cooperate for using a part of the radio capacity of one operator as transport link of the other operator. Preferentially the joint-optimal allocation procedure is executed to identify the best suited base station of operator B in the vicinity of the faulty base station of operator A. In the next step IAB between the selected base station of operator B and the faulty base station of operator A shall be established and transport data of operator A shall be transmitted via operator B's air interface and routed back into operator A's network.

**Cross-vendor transport configuration**

In a further embodiment of this invention, the dynamic allocation of transport resources on the air interface can be executed between base stations of different vendors. This procedure shall be applied within one operator's network or between the networks of two or more operators.

This aspect is beneficial for offering ultra-high reliability networks everywhere and in case of disasters or emergencies. It requires standardisation of the processes and messages to be exchanged.

## Advantages of the present invention over the prior art

This invention proposes a mechanism to overcome the failure of a traditional transport connection between the base station and the core network (= backhaul):

- After an interruption of the transport connection e.g., the fibre link, the OAM connection is no longer available, and the base station shall report the failure by establishing a transport link via the air interface to one of the adjacent base stations and sending a failure message to OAM or any other instance responsible for network surveillance and operation.
- For sending this message, the base station behaves like a UE using uplink resources on the air interface between the first base station of interrupted transport connection and a second base station that receives and forwards the message to a central network instance e.g., OAM.
- For fast recovery, a two-step mechanism shall be applied. In a first step, an automatism is executed that establishes a transport link between the second base station and the first base station using IAB or any other mechanism to assign a part of the air interface resources for exchanging transport traffic between the first base station and the second base station. The mechanism to trigger this automation is executed via a pre-configured message that is stored in the base station and sent to a predefined address after a specific failure case occurred. The destination base station can be pre-defined via network planning, or the connection is established to any of the base stations within the coverage area of the base station with the faulty transport link.

    ○ For ultra-fast recovery, the mechanism to establish IAB between two base stations can be triggered by a specific coding of the message in the physical layer. Thus, during the channel decoding process, the second base station is informed about the transport link failure of the first base station and executes a pre-defined mechanism to establish IAB. All necessary information about the configuration and the identity of the first base station are already available in the memory of the second base station or are included in the message sent from the first base station.
    ○ For less time-critical recovery procedures, the message is sent to its destination, OAM (being part of the backhaul) informs the second base station via a message to establish IAB to the first base station. For this purpose, OAM shall be informed about the identity of the second base station. The remote system can also be a SON system.

- Since it is not known whether the randomly selected base station with the best receive signal has a fibre link or whether it is connected via IAB, this first message is considered as first-aid message sent to any neighbouring base station to indicate the interrupted backhaul connection to request support for establishing an alternative transport connection.
- In a further step, the best suited base station in the coverage area of the first base station can be identified (preferably by means of an allocation unit being arranged in the base station or in the core network) taking into consideration the transport capacity, the capacity on the air interface for each supported technology, slicing requirements in terms of bandwidth requirements, radio propagation conditions, and traffic load of each base station. Based on the current traffic load and information about the traffic load in the past, predictions about the traffic load in the near future shall be generated. The past traffic load of a base station or cell is captured by performance counters e.g., on hourly basis and has a characteristic shape during the day and weekdays. Variances typically appear during the weekend and holiday periods. A calendar shall be used to take the different behaviour during these days into account and provide predictions of the traffic load during the next hours and days. Optionally, a joint-optimal allocation procedure shall be applied to identify the best suited base station to establish the transport link via the air interface to the first base station. The outcome of this procedure is the identity of the second base station.
- In this step, the first base station shall be informed to establish a transport link including an OAM connection via the air interface to the second base station or the second base station shall be informed to establish a transport link with an OAM connection to the first base station. The necessary information about the link and identity of the base stations and the configuration shall be included in the message.
- The transport link can be configured automatically in a way that the traffic can be transmitted via this remote base station. If a complete chain fails e.g., due to sequential backhaul interconnection, all these base stations shall initiate the repair procedure.

Execution of the inventive idea for backhaul offloading:

- The optimisation procedure to identify the best suited base station for establishing the transport link via the air interface can also be used for backhaul traffic offloading purposes. This is beneficial for example if the transport network is not able to transmit the upcoming traffic load due to congestion.

Application of the automatism to provide ultra-high reliability networks:

- The auto-recovery procedure shall be applied for ultra-high reliability networks with extremely low failure rates. The present invention allows the network to recover the transport link failure by immediately establishing an alternative transport link via the air interface to the next base station. Pre-configured messages dedicated to the kind of failure including all necessary information for establishing the in-band transport link on the air interface are defined. During the channel decoding process, the remote base station is adapted to extract this information to establish the transport link on the air interface. The risk of unavailability due to transport failures is reduced by means of software i.e., via a license model and not by additional hardware. Fast-recovery procedure

- Transmission of a message from a mobile terminal or a base station via the air interface to another base station with the intention that the message is decoded at the destination i.e., the receiving base station and the contents of the message is used for executing an action.

  ◦ According to a preferred modification of the invention, the information about the destination base station is embedded in the physical layer, for example in the channel coding.
  ◦ According to a preferred modification of the invention, IAB is executed to establish or modify a transport link between the base station that sent the message and the base station that received the message.
  ◦ According to a preferred modification of the invention, the final destination of this message is a destination point in the mobile network, fixed network or a server of the Internet or any other regular destination, but the embedded information is used by the base station to decode the message and execute the action. This final destination is necessary for establishing a usual bearer setup between the sending unit and the receiving unit.

**Summary:**

The presented invention does not propose IAB for coverage extension but to use this functionality in combination with an automatism to provide stability of the network. IAB is not continuously active and will be automatically established on demand e.g., at festivals, for temporary capacity sites or for the activation of the base station before finalisation of the underlying transport connection. The technology IAB that was intended for coverage expansion is used by the invention to reduce the network failure probability.

**The present invention offers a** cost-efficient way to achieve ultra-high reliability networks e.g., in the areas of automation and industry, autonomous driving, robotics, and tactile Internet.

The invention improves the reliability for tactile applications with a positive impact on delay since less re-transmissions will be needed.

There are further improvements for daisy chain configurations. In a daisy chain, the base station collects the traffic of all UEs connected to this base station and behaves towards the next base station as a high-capacity UE. Usually, daisy chains are used as replacement for the transport network. However, in a disaster situation, it can be used in a way that it transmits the data via the only existing link. In this disaster situation, e.g. flood, power generators can be established and mobile base stations can be deployed fast. With the procedure presented in this invention, the base station searches for neighbours and a basic service can be re-established. Thus, in case of disaster, for example an earthquake or flood, with destroyed fibre connection of a base station, a configuration will autonomously be established to offer a basic service including QoS control for assigning fewer resources assigned per UE due to bundling of traffic.

As a result, the invention provides a permanent functioning system that can automatically compensate a break of the transport link in an emergency situation. As combination of the existing network with a software-defined backup system, that is always present and compatible to existing antenna systems and the deployed backhaul, the whole system is always disposable.

Further, by the invention, an auto-healing procedure to immediately recover from transport link failures is proposed. The system is able to compensate the occurred link failure.

The presented invention describes a system and method for the resource assignment optimisation of both parts, transport and radio traffic on the air interface. Based on the Integrated Access and Backhaul (IAB) process, it introduces an automatism to immediately overcome a link failure on the conventional transport interface for achieving ultra-high reliability networks. Applying this method, e.g. in a disaster situation, allows the system to maintain a basic service, while the conventional transport link is interrupted.

**Abbreviations**

| | |
|---|---|
| 2G | Second Generation |
| 3G | Third Generation |
| 3GPP | 3rd Generation Partnership Project |
| 4G | Fourth Generation |
| 5G | Fifth Generation |
| 5QI | 5G QoS Identifier |
| 6G | Sixth Generation |
| AMF | Access and Mobility Management Function |
| ARP | Allocation/Retention Priority |
| BSC | Base Station Controller |
| BTS | Base Transceiver Station |
| DCN | Data Communication Network |
| eNodeB | 4G base station |
| eSIM | embedded-SIM |
| FDD | Frequency Division Duplex |
| gNB | 5G base station |
| GPS | Global Positioning System |
| IAB | Integrated Access and Backhaul |
| IoT | Internet of Things |
| IPSec | Internet Protocol Security |
| ITU-T | International Telecommunication Union - Telecommunication |
| LAPDm | Link Access Procedure on the Dm Channel |
| MCS | Modulation and Coding Schemes |
| NB | Narrow-Band |
| NR | New Radio / 5G air interface |
| NodeB | 3G base station |
| OAM | Operations, Administration and Maintenance |
| PRTC | Primary Reference Time Clock |
| QCI | QoS Class Identifier |
| QoS | Quality of Service |
| RAN | Radio Access Network |
| RB | Resource Block |
| RET | Remote Electrical Tilting |
| S-GW | Serving Gateway |
| SIM | Subscriber Identity Module |
| SINR | Signal to Interference and Noise Ratio |
| SON | Self-Optimising Network |
| TDD | Time Division Duplex |
| TF | Transport Format |
| TLS | Transport Layer Security |
| TTI | Transmission Time Interval |
| UE | User Equipment |
| Um | 2G air interface |
| UPF | User plane Function |
| USIM | Universal Subscriber Identity Module |
| Uu | 3G/4G air interface |

**Literature**

[1] 3GPP TS 23.501, "Technical Specification Group Services and System Aspects; System architecture for the 5G System (5GS); Stage 2 (Release 16)", 2023, http://www.3gpp.org.

[2] 3GPP TS 38.174, "Technical Specification Group Radio Access Network; NR; Integrated access and backhaul radio transmission and reception (Release 16)", 2023, http://www.3gpp.org.

[3] 3GPP TS 38.401, "Technical Specification Group Radio Access Network; NG-RAN; Architecture description (Release 17)", 2023, http://www.3gpp.org.

[4] 3GPP TS 38.300, "Technical Specification Group Radio Access Network; NR; NR and NG-RAN Overall Description; Stage 2 (Release 17)", 2023, http://www.3gpp.org.

[5] 3GPP TS 38.401, "Technical Specification Group Radio Access Network; NG-RAN; Architecture description (Release 17)", 2023, http://www.3gpp.org.

[6] 3GPP TR 22.839, "Technical Specification Group Services and System Aspects; Study on Vehicle-Mounted Relays; Stage 1 (Release 18)", 2021, http://www.3gpp.org.

[7] 3GPP TS 38.214, "Technical Specification Group Radio Access Network; NR; Physical layer procedures for data, (Release 18)", 2023, http://www.3gpp.org.

[8] 3GPP TS 38.213, "Technical Specification Group Radio Access Network; NR; Physical layer procedures for control (Release 18)", 2023, http://www.3gpp.org.

[9] 3GPP TS 38.211, "Technical Specification Group Radio Access Network; NR; Physical channels and modulation (Release 18)", 2023, http://www.3gpp.org.

[10] 3GPP TR 32.804, "Technical Specification Group Services and System Aspects; Telecommunications management; Remote control of Electrical Tilting (RET) antennas; Requirements (Release 6)", 2005, http://www.3gpp.org.

[11] Dr. C. Ball, Dr. K. Ivanov, R. Müllner, F. Treml, "Verfahren zur Zuweisung funktechnischer Ressourcen für eine Datenübertragung in einem Funkkommunikationssystem", EP 1 453 339 A1, 2004, https://depatisnet.dpma.de/.

[12] ETSI TR 103 495, "Network Technologies (NTECH); Automatic network engineering for the self-managing Future Internet (AFI); Autonomicity and Self-Management in Wireless Ad-hoc/Mesh Networks: Autonomicity-enabled Ad-hoc and Mesh Network Architectures", 2017, https://www.etsi.org/deliver/etsi tr/103400 103499/103495/01.01.01 60/tr 103495 v010101p.pdf.

## Claims

1. A base station for use in a mobile telecommunication network, comprising:

   an air interface adapted to establish an uplink data transfer and/or downlink data transfer with at least one user equipment of the network,
   a transport interface adapted to establish a transport link to the backhaul of the network, preferably wherein the transport interface is a microwave interface or an optical fibre interface, and
   a monitoring unit adapted to monitor a transport link established via the transport interface to the backhaul of the network, preferably wherein the monitoring unit is adapted to monitor the existence and/or the properties of the transport link established via the transport interface to the backhaul of the network, wherein
   the base station is further adapted, on basis of a monitoring result of the monitoring unit, to establish a link e.g., a transport link, to the backhaul of the network via the air interface, preferably wherein establishing a link e.g., a transport link, to the backhaul of the network via the air interface is made automatically on basis of the monitoring result of the monitoring unit.

2. The base station according to claim 1, wherein establishing a link e.g., a transport link, to the backhaul of the network via the air interface is initiated by contacting at least one adjacent base station lying in a coverage area of the air interface via an initiation message sent over the air interface of the base station.

3. The base station according to any one of the preceding claims, wherein the initiation message contains information requesting the establishment of a link e.g., a transport link, between the origin of the sender of the initiation message and the backhaul of the network via the air interface of the base station.

4. The base station according to any one of the preceding claims, wherein configuration data for establishing a link e.g., a transport link, over the air interface of the base station to at least one adjacent base station lying in the coverage area of the base station are prestored in the base station.

5. The base station according to any one of the preceding claims 2-4, wherein the base station is adapted to send the initiation message to all adjacent base stations lying in the coverage area of the air interfaces and/or the link e.g., a transport link to be established via the air interface includes an OAM connection for the base station.

6. The base station according to any one of the preceding claims, wherein the base station further comprises an allocation unit for an optimal allocation of the link e.g., a transport link, to one of a plurality of base stations lying in the coverage area of the air interfaces having received the initial message, preferably wherein the allocation unit is adapted to evaluate a plurality of potential links e.g., transport links, to be routed via different paths of adjacent base stations and to choose one of them, e.g. on basis of transport capacity, capacity of the air interface, radio propagation conditions and/or traffic load.

7. The base station according to any one of the preceding claims 2-6, wherein, when sending the initiation message, the base station is adapted to act as a user equipment using uplink resources of the at least one adjacent base station lying in the coverage area of the air interface to which the initiation message is to be sent.

8. The base station according to any one of the preceding claims 2-7, wherein the initiation message is a preconfigured message stored in a base station which is to be sent via the air interface to at least one predefined address of a base station after the result of the monitoring unit requires the establishing of a link e.g., a transport link, over the air interface.

9. The base station of any one of the preceding claims, wherein the monitoring unit is adapted to monitor

   the transport link established via the transport interface with respect to its existence, a failure state and/or a congestion state, and/or
   the existence, a failure state and/or the properties of a link of the base station to a synchronization signal, in particular a satellite-based synchronization signal like a GPS-signal, necessary for synchronization of the base station for sending and receiving data via the air interface, wherein
   a monitoring result on the necessity of establishing a link e.g., a transport link, via the air interface is made on basis of the at least one monitored link.

10. A method for operating a base station, preferably a base station of any one of the preceding claims, or a mobile telecommunication network, preferably a network comprising at least one base station according to any one of the preceding claims, comprising the steps of:

    monitoring a transport link of a base station to a backhaul of the network established via a transport interface of a respective base station, preferably the existence and/or the properties of the transport link established by the transport interface to the backhaul of the network, and
    establishing or automatically establishing, on basis of a monitoring result of the monitoring unit, a link e.g., a transport link, to the backhaul of the network via the air interface to a respective base station, preferably wherein the transport interface of this base station is a microwave interface or an optical fibre interface.

11. The method of claim 10, wherein establishing a link e.g., a transport link, to the backhaul of the network via the air interface by at least one base station is initiated by contacting at least one adjacent base station lying in a coverage area of the air interface via an initiation message sent over the air interface of the base station.

12. A method according to claim 10 or 11, wherein the at least one UE (user equipment) is used as transport link to forward data from one base station to another base station.

13. A method according to any one of claims 10 to 12, wherein for fast recovery, a two-step mechanism is applied, wherein in a first step, an automatism is executed that establishes a transport link between a second base station and a first base station using IAB or any other mechanism to assign a part of the air interface resources for exchanging transport traffic between the first base station and the second base station and wherein in a second step the best suited base station in the coverage area of the first base station is be identified .

14. A mobile telecommunication network, comprising:

a plurality of base stations according to any one of the preceding claims 1-9, preferably wherein
in each of the plurality of base stations a pre-configured initiation message for initiating a link e.g., a transport link, via its respective air interface is stored that contains a base station dependent target address identifying an adjacent base station to which the link e.g., a transport link, via its air interface is to be established.

15. The network of preceding claim 14, wherein
the network is adapted to evaluate and to assign resources for the link e.g., the transport link, via the air interface for at least one base station by jointly considering the complete chain of connections from a base station requesting a link e.g., a transport link, via its air interface to the backhaul, preferably wherein different paths between the base station requesting a link e.g., a transport link, via its air interface and the backhaul are compared with one another.

16. A mobile telecommunication network, preferably a network according to any one of the preceding claims 14 or 15, comprising

at least one base station having a transport link to the backhaul of the network via a respective transport interface of the base station, preferably wherein the transport interface is a microwave interface or an optical fibre interface, wherein
the at least one base station has a redundant link e.g., a transport link, to the backhaul of the network established via the air interface of said base station, preferably wherein the transport link via the transport interface and the redundant link e.g., transport link, via the air interface are maintained side-by-side.

Fig. 1

EP 4 694 573 A1

Fig. 2

Fig. 3

Fig. 4

Fig. 5

Europäisches
Patentamt
European
Patent Office
Office européen
des brevets

# EUROPEAN SEARCH REPORT

**Application Number**

EP 24 19 2885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 248 376 B (HUAWEI TECH CO LTD) 24 May 2022 (2022-05-24) * paragraph [0001] - paragraph [0026] * ----- | 1-16 | INV. H04W92/12 H04W92/20 |
| X | US 2020/281037 A1 (CUI ZHI [US] ET AL) 3 September 2020 (2020-09-03) * paragraph [0001] - paragraph [0003] * * paragraph [0030] * * paragraph [0033] * * paragraph [0063] * * paragraph [0065] - paragraph [0066] * * claims 1,11,12,14,15 * ----- | 1-16 | ADD. H04W92/04 |
| X | CN 112 602 353 B (IPCOM GMBH & CO KG) 29 August 2023 (2023-08-29) * paragraph [0001] - paragraph [0046] * * paragraph [0056] * * paragraph [0060] * ----- | 1-16 | |
| X | US 10 278 119 B2 (BRITISH TELECOMM [GB]) 30 April 2019 (2019-04-30) * column 1, line 1 - column 3, line 55 * * column 6, line 43 - line 54 * ----- | 1-16 | **TECHNICAL FIELDS SEARCHED (IPC)** H04W |

The present search report has been drawn up for all claims

| Place of search | Date of completion of the search | Examiner |
|---|---|---|
| The Hague | 15 January 2025 | Vaskimo, Kimmo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2885

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | | Publication date | Patent family member(s) | | Publication date |
|---|---|---|---|---|---|
| CN 110248376 | B | 24-05-2022 | CN | 110248376 A | 17-09-2019 |
| | | | EP | 3749009 A1 | 09-12-2020 |
| | | | US | 2020404518 A1 | 24-12-2020 |
| | | | WO | 2019170087 A1 | 12-09-2019 |
| US 2020281037 | A1 | 03-09-2020 | US | 2020281037 A1 | 03-09-2020 |
| | | | US | 2022183099 A1 | 09-06-2022 |
| | | | US | 2025008590 A1 | 02-01-2025 |
| CN 112602353 | B | 29-08-2023 | BR | 112021000691 A2 | 13-04-2021 |
| | | | CN | 112602353 A | 02-04-2021 |
| | | | EP | 3834492 A1 | 16-06-2021 |
| | | | JP | 7302796 B2 | 04-07-2023 |
| | | | JP | 2021532631 A | 25-11-2021 |
| | | | KR | 20210040053 A | 12-04-2021 |
| | | | US | 2021235525 A1 | 29-07-2021 |
| | | | WO | 2020030730 A1 | 13-02-2020 |
| US 10278119 | B2 | 30-04-2019 | EP | 2739093 A1 | 04-06-2014 |
| | | | EP | 2926599 A2 | 07-10-2015 |
| | | | US | 2015305082 A1 | 22-10-2015 |
| | | | WO | 2014083295 A2 | 05-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1453339 A

- EP 1453339 A1, Dr. C. Ball, Dr. K. Ivanov, R. Müllner, F. Treml

**Non-patent literature cited in the description**

- Technical Specification Group Services and System Aspects; System architecture for the 5G System (5GS); Stage 2 (Release 16). *3GPP TS 23.501*, 2023, http://www.3gpp.org
- Technical Specification Group Radio Access Network; NR; Integrated access and backhaul radio transmission and reception (Release 16). *3GPP TS 38.174*, 2023, http://www.3gpp.org
- Technical Specification Group Radio Access Network; NG-RAN; Architecture description (Release 17). *3GPP TS 38.401*, 2023, http://www.3gpp.org
- Technical Specification Group Radio Access Network; NR; NR and NG-RAN Overall Description; Stage 2 (Release 17). *3GPP TS 38.300*, 2023, http://www.3gpp.org
- Technical Specification Group Services and System Aspects; Study on Vehicle-Mounted Relays; Stage 1 (Release 18). *3GPP TR 22.839*, 2021, http://www.3gpp.org
- Technical Specification Group Radio Access Network; NR; Physical layer procedures for data, (Release 18). *3GPP TS 38.214*, 2023, http://www.3gpp.org

- Technical Specification Group Radio Access Network; NR; Physical layer procedures for control (Release 18). *3GPP TS 38.213*, 2023, http://www.3gpp.org
- Technical Specification Group Radio Access Network; NR; Physical channels and modulation (Release 18). *3GPP TS 38.211*, 2023, http://www.3gpp.org
- Technical Specification Group Services and System Aspects; Telecommunications management; Remote control of Electrical Tilting (RET) antennas; Requirements (Release 6). *3GPP TR 32.804*, 2005, http://www.3gpp.org
- Network Technologies (NTECH); Automatic network engineering for the self-managing Future Internet (AFI); Autonomicity and Self-Management in Wireless Ad-hoc/Mesh Networks: Autonomicity-enabled Ad-hoc and Mesh Network Architectures. *ETSI TR 103 495*, 2017, https://www.etsi.org/deliver/etsi tr/103400 103499/103495/01.01.01 60/tr 103495 v010101p.pdf